Europäisches Patentamt

European Patent Office

Office européen des brevets

(11) Numéro de publication: **0 235 407 B1**

# FASCICULE DE BREVET EUROPEEN

(45) Date de publication de fascicule du brevet: **18.03.92**    (51) Int. Cl.⁵: **H04N 5/46**

(21) Numéro de dépôt: **86202307.4**

(22) Date de dépôt: **17.12.86**

(54) **Appareil récepteur de télévision à reconnaissance automatique de norme.**

(30) Priorité: **27.12.85 FR 8519284**

(43) Date de publication de la demande:
**09.09.87 Bulletin  87/37**

(45) Mention de la délivrance du brevet:
**18.03.92 Bulletin  92/12**

(84) Etats contractants désignés:
**BE DE FR**

(56) Documents cités:
**EP-A- 0 049 321**
**FR-A- 2 367 394**
**FR-A- 2 417 903**

(73) Titulaire: **PHILIPS ELECTRONIOUE GRAND PU-
BLIC
51, Rue Carnot
F-92150 Suresnes(FR)**
(84) Etats contractants désignés:
**FR**

(73) Titulaire: **N.V. Philips' Gloeilampenfabrieken
Groenewoudseweg 1
NL-5621 BA Eindhoven(NL)**
(84) Etats contractants désignés:
**BE DE**

(72) Inventeur: **Bendahan, Samuel Société Civile
S.P.I.D.
209, rue de l'Université
F-75007 Paris(FR)**

(74) Mandataire: **Caron, Jean et al
Société Civile S.P.I.D. 156, Boulevard Haussmann
F-75008 Paris(FR)**

## Description

L'invention concerne un appareil de télévision pouvant recevoir des émissions répondant à plusieurs normes différentes, muni d'un dispositif de détermination de la norme basée sur l'écart de fréquence entre les porteuses son et vision, et sur la bande de fréquence dans laquelle se trouve l'émission reçue.

On sait que les émissions actuellement émises dans les différents pays, notamment en Europe, répondent à des normes multiples. De ce fait, les utilisateurs frontaliers ou nomades utilisent des récepteurs dits "multistandards" qui permettent de recevoir et de restituer des émissions répondant à plusieurs normes. Pour éviter à ces utilisateurs de devoir connaître les caractéristiques des différents émetteurs qu'ils souhaitent recevoir, afin de positionner des commandes de sélection manuelles, il est souhaitable que le récepteur soit capable de reconnaître automatiquement les normes.

Les normes européennes usuelles sont les normes appelées B, G, I et L conformément au rapport R 624 du Comité Consultatif International des Radiocommunications. On a constaté que ces normes sont telles que la détermination de l'écart de fréquence appelé fréquence interporteuse entre les porteuses son et vision est suffisant, avec la connaissance de la bande de fréquence dans laquelle se trouve l'émission reçue, pour déterminer la norme de l'émission reçue.

Un appareil récepteur de télévision basé sur ce principe est décrit par les brevets français n° FR-A-1544794 et FR-A-2367394. Selon ces deux documents, le récepteur comporte un ou plusieurs circuits accordés, situés en sortie des étages dits à fréquence intermédiaire, et qui entrent en résonance sur le battement interporteuse qui leur correspond. Ceci produit une tension électrique dont la détection aux bornes du circuit accordé permet de commander l'actionnement des commutations nécessaires.

Un tel dispositif présente l'inconvénient de mettre en jeu plusieurs circuits spécifiques supplémentaires : deux circuits accordés qui doivent être ajustés avec précision, des circuits détecteurs de résonance, des circuits logiques pour en traiter l'information. L'invention se propose de fournir un système de détection de norme plus économique, qui évite l'emploi de tous ces circuits matériels.

Il est basé sur l'idée qu'au lieu de détecter un écart par battement entre les deux porteuses, ainsi qu'il est d'usage, on peut utiliser un circuit déjà présent dans le récépteur, et capable de détecter la présence d'une porteuse, pour détecter l'une après l'autre les deux fréquences vision et son, en utilisant à chaque fois le même circuit détecteur de présence d'une porteuse.

Le récepteur selon l'invention, muni d'un dispositif de recherche automatique des émissions, fonctionnant par incréments de fréquence standards successifs et qui connaît, après chaque incrément, la valeur absolue de la fréquence utilisée, dispositif comportant des moyens pour vérifier après chaque incrément standard si une porteuse est reçue et pour, dans ce cas, mémoriser provisoirement la fréquence utilisée, est notamment remarquable en ce qu'il est muni en outre de moyens pour introduire alors un incrément de fréquence spécial, égal au susdit écart de fréquence entre les porteuses son et vision de l'une des émissions susceptibles d'être reçues, pour vérifier après l'introduction de cet incrément si une porteuse est également reçue sur la nouvelle fréquence, et pour exploiter cette information.

Le récepteur est d'un type moderne équipé d'un dispositif de recherche automatique d'émissions. Ce dispositif comprend un synthétiseur de fréquence programmable, associé à un circuit de pilotage du processus, de préférence un microprocesseur, qui indique les fréquences successives à essayer et arrête la recherche lorsqu'une émission est trouvée. Ces dispositifs étant déjà présents dans le récepteur, les moyens nouveaux de l'invention ajoutent des étapes au processus de recherche, mais ne nécessitent pas de circuits matériels supplémentaires. Ils sont donc très économiques.

On poourrait procéder par exemple à une recherche des émetteurs de norme L, dont la fréquence interporteuse est de 6,5 MHZ, en balayant toutes les bandes de réception et en appliquant pour chaque émission détectée un incrément spécial de 6,5 MHZ, puis recommencer l'analyse en cherchant d'autres normes, c'est-à-dire d'autres interporteuses. Il est toutefois plus avantageux de balayer une seule fois l'ensemble des bandes et, pour chaque émission trouvée, de rechercher successivement les différentes normes.

Le récepteur selon l'invention est à cet effet remarquable en ce qu'il est muni de moyens pour, lorsqu'une porteuse est reçue après un incrément standard, introduire alors successivement plusieurs incréments spéciaux égaux chacun à l'un des écarts de fréquence entre les porteuses son et vision des émissions susceptibles d'être reçues, et pour exploiter l'information indiquant avec lequel d'entre eux une porteuse est également reçue.

Le récepteur pourrait alors afficher la norme reconnue et laisser l'utilisateur effectuer manuellement les commutations nécessaires. Il est néanmoins plus satisfaisant de lui éviter cette contrainte, ce pour quoi l'appareil est avantageusement muni de moyens pour commuter les circuits amplificateurs et démodulateurs du récepteur en fonction de ladite information enregistrée.

L'appareil moderne selon l'invention est en outre remarquable en ce qu'il est muni de moyens pour, après l'application d'un ou de plusieurs incréments, ramener la fréquence de l'oscillateur à la valeur qui permet la réception de l'émission trouvée, en fonction de la valeur de l'incrément qui a procuré également la réception d'une porteuse, et de la susdite fréquence mémorisée provisoirement, ces moyens ayant notamment pour effet, quand la fréquence mémorisée est comprise dans les bandes dites III, IV ou V, de fixer la fréquence de l'oscillateur pour la réception égale à la fréquence mémorisée provisoirement, et quand la fréquence mémorisée est comprise dans la bande dite I, la recherche étant effectuée avec un positionnement initial en norme B, si l'incrément spécial qui a procuré également la réception d'une porteuse est égal à 6,5 MHZ, de fixer la fréquence de l'oscillateur égale à la fréquence mémorisée provisoirement augmentée de 1,5 MHZ, alors que si ledit incrément est égal à 5,5 MHZ, cette fréquence de l'oscillateur est égale à la fréquence mémorisée.

La description qui va suivre, en regard des dessins annexés décrivant des exemples non limitatifs, fera bien comprendre comment l'invention peut être réalisée.

La figure 1 est un schéma bloc représentant les dispositifs utilisés dans un mode de réalisation de l'invention.

La figure 2 représente des courbes servant à illustrer le fonctionnement des moyens pour vérifier si une émission est reçue.

La figure 3 représente un diagramme illustrant le mode d'action des moyens principaux de l'invention.

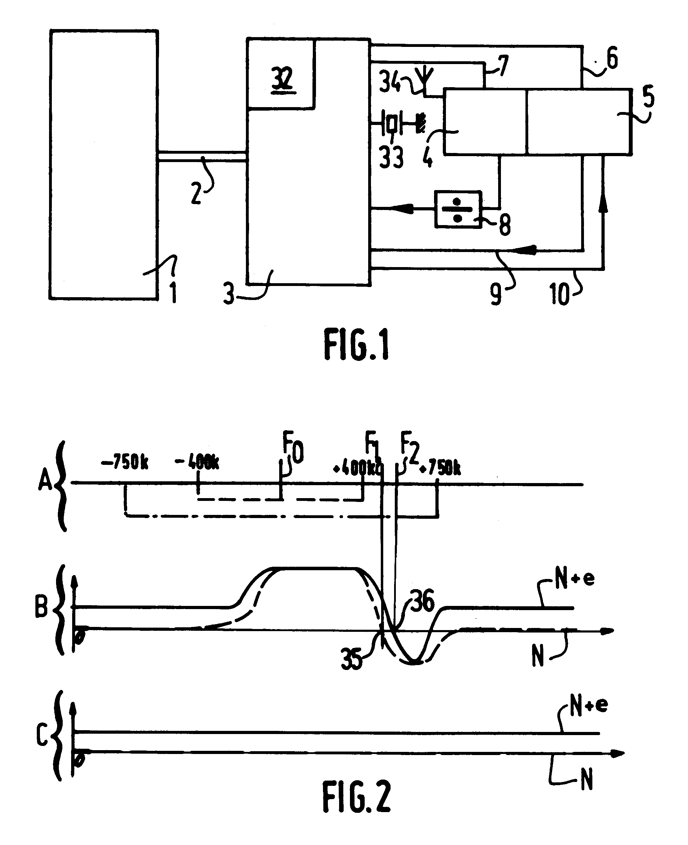

Le mode de réalisation préféré de l'invention utilise un microprocesseur 1 (figure 1) associé à un circuit intégré 3 servant d'interface du microprocesseur pour les fonctions de syntonisation et de contrôle. Ils sont reliés par un bus 2. Le microprocesseur est par exemple du type MAB 8400 et le circuit intégré du type SAB3035 commercialisés par la société Philips. Pour une description détaillée de ces éléments, on peut se reporter aux documentations disponibles auprès du fournisseur. Le circuit intégré SAB 3035 comporte notamment un circuit diviseur de fréquence programmable par le microprocesseur, et un oscillateur fixe basé sur un quartz 33 qui, en association avec l'oscillateur local contenu dans un circuit syntoniseur 4, et un premier diviseur fixe de fréquence 8, permettent d'ajuster au moyen d'une connexion de commande 7 la fréquence de cet oscillateur local. Le circuit syntoniseur 4 réalise une multiplication de fréquence entre le signal d'oscillateur local et le signal reçu sur l'antenne 34 pour fournir de façon bien connue le signal à fréquence intermédiaire dit "FI" à l'amplificateur à fréquence intermédiaire 6, qui comporte notamment un discriminateur de fréquence destiné à assurer en association avec le synthétiseur la fonction dite CAF, c'est-à-dire "contrôle automatique de fréquence". Cette fonction est bien connue. La tension issue du discriminateur est transmise par la connexion 9 au circuit intégré 3 pour assurer une correction de fréquence permettant de caler celle-ci sur la valeur exacte correspondant à l'émission reçue. Cette fonction est nécessaire, car la fréquence définie par le microprocesseur assure seulement un dégrossissage, et la fréquence finale exacte est obtenue par l'action de la CAF.

L'appareil est prévu pour recevoir des émissions correspondant aux normes européennes B, G, L et I dont les caractéristiques sont résumées dans le tableau I. On peut constater que les normes B et G ne peuvent être distinguées sur le seul critère de l'écart interporteuse. Toutefois les caractéristiques des normes B et G sont presque identiques et une commutation n'est pas nécessaire.

TABLEAU I

| Norme | B | G | I | L |
|---|---|---|---|---|
| Largeur de canal MHZ | 7 | 8 | 8 | 8 |
| Ecart/porteuses MHZ | 5,5 | 5,5 | 6 | 6,5 |
| Sens de modulation vidéo | - | - | - | + |
| Modulation son | F3 | F3 | F3 | A3 |

Si l'on désirait cependant distinguer ces normes, sachant que la norme B est utilisée exclusivement dans les bandes I et III, et la norme G exclusivement dans les bandes IV et V, la détermination de la norme est possible en se basant sur la bande de fréquence dans laquelle se trouve l'émission reçue.

L'appareil est muni d'un dispositif de recherche automatique des émissions, fonctionnant par incréments de fréquence standards successifs et repérés en fréquence.

Lorsque l'utilisateur enclenche ce dispositif, le microprocesseur place la fréquence de l'oscillateur local par exemple de manière à recevoir la fréquence la plus basse de la bande I. Il commande un test de réception d'émission qui sera décrit plus en détail ci-dessous. Si aucune émission n'est reçue, il incrémente la fréquence d'une valeur dite "incrément standard", égale à 1 MHZ, puis déclenche un test, et ainsi de suite pour l'ensemble des bandes I, III, IV et V.

Pour chaque pas de cette procédure, il connait la valeur absolue de la fréquence utilisée : c'est ce qu'on entend par l'expression "repéré en fréquence".

Les moyens pour vérifier après chaque incrément standard si une porteuse est reçue sont constitués par un système générateur de perturbation appliquée au circuit de CAF, associé à des moyens pour vérifier si la fréquence de l'oscillateur local reste comprise entre des limites déterminées après ladite perturbation.

Sur la figure 2A, le repère $F_0$ indique la fréquence de départ installée sous la commande du microprocesseur.

Cette fréquence est définie avec une précision de ± 400 KHZ indiquée sur la figure. Le microprocesseur commence par mettre en service la CAF. Celle-ci agit en corrigeant le chiffre de fréquence mémorisé dans le circuit 3, jusqu'à ce que la tension d'erreur de la CAF soit nulle. On suppose que, en présence d'une émission, sous cette action la fréquence passe à F1. La tension de CAF alors nulle est illustrée par le point 35 de la courbe N (en pointillé, figure 2B) qui représente la variation de la tension normale de CAF en fonction de la fréquence. Si au contraire il n'y a pas d'émission, la tension de CAF (un signal bruit étant alors seulement présent) est nulle pour $F_0$ ainsi que pour toutes les fréquences autour de $F_0$, ainsi que le représente la courbe N de la figure 2C. Alors la fréquence reste à $F_0$. Pour distinguer si une porteuse est reçue, le microprocesseur commande au circuit 3 d'appliquer une perturbation au circuit de CAF, c'est-à-dire de superposer à la tension de CAF une tension constante prédéterminée, amenée au circuit de CAF par la connexion 10. Alors la tension de CAF devient celle représentée en trait plein, indiquée "N + e". Si une porteuse est reçue (figure 2B) la tension est nulle au point 36 qui définit donc une nouvelle fréquence stable F2. Si aucune porteuse n'est reçue (figure 2C) la tension "N + e" n'est jamais nulle dans la bande de fréquence représentée (± 750 KHZ) et la fréquence dérive au point de sortir de cette bande. Le microprocesseur lit la fréquence mémorisé dans le circuit 3 et constate soit qu'elle est restée à proximité de $F_0$ soit qu'elle a dérivé à plus de 750 KHZ. Dans le premier cas le test est positif et conclut à la présence d'une porteuse correspondant à $F_0$. Alors la fréquence F1 est provisoirement mémorisée. Le raisonnement s'applique de la même manière si les fréquences sont celles de l'oscillateur local ou celles de l'émission reçue, toujours décalées d'une valeur égale à la fréquence intermédiaire. Pour l'homogénéïté du langage ou supposera, sauf précision contraire, qu'on parle toujours de la fréquence d'oscillateur.

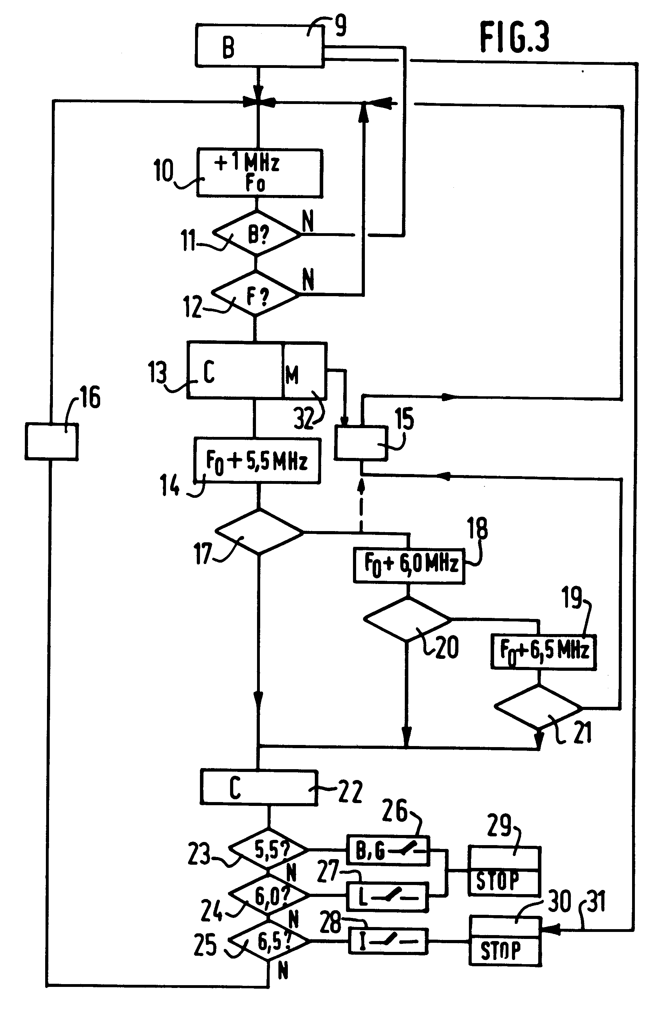

Les étapes suivies par le dispositif selon l'invention sont indiquées sur la figure 3. Le bloc 9 indique une étape de détermination de la fréquence de départ, choisie pour qu'après augmentation de 1 MHZ dans l'étape 10 elle soit la fréquence de départ de la bande à examiner. On commence par exemple par la bande I. Après les étapes 9 et 10 on arrive à un test 11 pour vérifier si l'on dépasse la limite supérieure de la bande, dans ce cas on retourne à l'étape 9 pour déterminer la fréquence de départ de la bande suivante. Bien entendu ces fréquences sont déterminées en tenant compte du fait que, selon les bandes, la fréquence d'oscillateur est au-dessus ou au-dessous de la fréquence à recevoir. Si on est toujours dans la bande en cours d'examen, ou arrive au test 12, qui correspond en fait à la série d'opération décrites plus haut pour vérifier si une porteuse est reçue. Si ce n'est pas le cas on retourne à l'étape 10. Si c'est le cas, l'étape 13 détermine la fréquence utile F1 (de la figure 2) et l'enregistre provisoirement dans la mémoire 32, puis l'étape 14 conduit à ajouter alors un incrément de fréquence spécial, égal au susdit écart de fréquence entre les porteuses son et vision de l'une des émissions susceptibles d'être reçues.

Ici cet incrément est de 5,5 MHZ correspondant à la norme B si l'on est en bande I ou III ou à la norme G si l'on est en bande IV ou V. L'étape suivante 17 est un test dans lequel on vérifie de la même façon qu'au cours du test 12 mais après l'introduction de l'incrément de 5,5 MHZ, si une porteuse est également reçue sur la nouvelle fréquence. Dans la plupart des cas le son est au-dessus de la vision, et la porteuse alors reçue correspond, non pas à une autre émission, mais à la porteuse son de l'émission dont on vient de détecter la porteuse vision. Si on ne détecte pas de porteuse après l'incrément de 5,5 MHZ, on peut retourner par l'étape 15, qui supprime l'incrément spécial, à l'étape 10 qui poursuit la recherche. Ce chemin indiqué en pointillé n'est pas avantageux, et il est préférable d'éxecuter immédiatement les tests 20 et 21, chacun d'eux étant identique au test 17. Avant le test 20, l'étape 18 introduit un incrément spécial de 6,0 MHZ par rapport à la fréquence mémorisée en 32, incrément correspondant à la norme I, et l'étape 19 introduit avant le test 21 un incrément spécial de 6,5 MHZ, toujours par rapport à la fréquence mémorisée en 32, incrément correspondant à la norme L.

Si au cours de ce test 21, aucune porteuse n'est trouvée, on retourne à l'étape 10 via la suppression de l'incrément spécial en 15.

Si au cours de l'un quelconque des tests 17, 20, 21 une porteuse est trouvée, cette information est exploitée dans l'étape 22 qui permet de déterminer, d'une manière analogue à celle de l'étape 13, la

EP 0 235 407 B1

fréquence exacte de la porteuse trouvée (analogue à F1 de la figure 2) puis une série de tests 23 à 25 examinent l'écart entre cette fréquence et celle enregistrée en 32 et aiguillent le processus sur les étapes respectivement 26 à 28 qui positionnent de façon connue les commutateurs du téléviseur pour recevoir les normes respectivement B ou G, L, et I. Comme il a été indiqué plus haut, le choix entre B et G (si on l'estime nécessaire, car ces deux normes sont très peu différentes l'une de l'autre) peut se faire sur la base de la bande reçue : I, III d'une part, ou IV, V d'autre part. Enfin les étapes 29 et 30 ramènent la fréquence de l'oscillateur à la valeur qui permet la réception de l'émission trouvée. Cette valeur dépend de la susdite fréquence mémorisée provisoirement en 32, et de la valeur de l'incrément qui a procuré également la réception d'une émission. Dans les bandes III, IV et V, quelle que soit la norme, la porteuse son est toujours au-dessus de la porteuse vision. Cette dernière correspond donc à la première fréquence trouvée, mémorisée provisoirement dans 32. Alors la fréquence de l'oscillateur, choisie pour la réception, est égale à cette fréquence. C'est également le cas de la norme B en bande I. Un cas particulier correspond à la norme L en bande I. Il s'agit, parmi les bandes en question ici, du seul cas où la porteuse son est au-dessus de la porteuse vision. En outre, en bande I, on suppose que la recherche est réalisée en positionnant au départ les circuits de téléviseur en norme B, c'est-à-dire avec une FI vision choisie à 37,7 MHZ (Le circuit 4, s'il y a lieu, commute le circuit FI 5 en fonction de la bande avant de commencer la recherche, via la connexion de commande 6), alors qu'elle doit être de 32,7 MHZ en norme L. Lorsqu'une émission a été trouvée avec la norme L (incrément spécial de 6,5 MHZ), la fréquence de l'oscillateur choisie pour la réception est alors égale à la fréquence mémorisée provisoirement, augmentée de 1,5 MHZ. En effet, avec une FI à 37,7 MHZ au cours de la recherche, la première porteuse trouvée est la porteuse son, et la porteuse vision est 6,5 MHZ au-dessus, soit à 37,7 - 6,5 = 31,2 MHZ sous la fréquence mémorisée pour l'oscillateur. (Ce dernier est au dessus de la porteuse). Comme on désire une FI à 32,7 MHZ il faut ajouter 1,5 MHZ aux 31,2 MHZ pour y arriver.

Au contraire si l'incrément spécial est égal à 5,5 MHZ, c'est qu'on est en présence de la norme B, la FI doit rester à 37,7 MHZ, et donc la fréquence de l'oscillateur permettant la réception est égale à la fréquence mémorisée.

Après le calcul de cette fréquence, le programme s'arrête ("STOP") et l'émission est visualisée. L'utilisateur peut alors de façon connue choisir de mémoriser les caractéristiques de l'émission et lui affecter un code personnel pour pouvoir la rappeler ultérieurement sans avoir à procéder à nouveau à une recherche.

Il va de soi qu'un choix différent de fréquences intermédiaires est parfois possible, et que les adaptations nécessaires conduisent à des options éventuellment différentes, qui sont à la portée de l'homme du métier et ne sortent pas du cadre de l'invention.

Il y a un cas où le processus est en défaut : lorsqu'on utilise un périphérique muni d'un modulateur simplifié, par exemple un jeu vidéo ou un ordinateur domestique, il arrive que deux porteuses son soient présentes de part et d'autre de la porteuse vision. Le dispositif de recherche reconnait la bonne fréquence interporteuse mais peut prendre la porteuse son inférieure pour la porteuse vision. Dans ce cas l'utilisateur devra seulement ordonner la poursuite de la recherche, et lorsqu'elle s'arrêtera à nouveau sur une émission, il s'agira alors des fréquences correctes.

**Revendications**

1. Appareil récepteur de télévision pouvant recevoir des émissions répondant à plusieurs normes différentes, muni d'un dispositif de détermination de la norme basé sur l'écart de fréquence entre les porteuses son et vision et sur la bande de fréquence dans laquelle se trouve l'émission reçue, caractérisé en ce que, l'appareil étant muni d'un dispositif de recherche automatique des émissions, comportant un oscillateur local fonctionnant par incréments de fréquence standards successifs et qui connaît, après chaque incrément, la valeur absolue de la fréquence représentative de la fréquence de l'oscillateur local, dispositif comportant des moyens pour vérifier après chaque incrément standard si une porteuse est reçue et pour, dans ce cas, mémoriser provisoirement une fréquence représentative de la fréquence de l'oscillateur local, il est muni en outre de moyens pour introduire alors un incrément de fréquence spécial, égal au susdit écart de fréquence entre les porteuses son et vision de l'une des émissions susceptibles d'être reçues, pour vérifier après l'introduction de cet incrément si une porteuse est également reçue en utilisant la nouvelle fréquence, et pour exploiter cette information.

2. Appareil récepteur selon la revendication 1, caractérisé en ce qu'il est muni de moyens pour, lorsqu'une porteuse est reçue après un incrément standard, introduire alors successivement plusieurs incréments spéciaux égaux chacun à l'un des écarts de fréquence entre les porteuses son et vision

5

des émissions susceptibles d'être reçues, et pour exploiter l'information indiquant avec lequel d'entre eux une porteuse est également reçue.

3. Appareil selon la revendication 2, caractérisé en ce qu'il est muni de moyens pour commuter les circuits amplificateurs et démodulateurs du récepteur en fonction de ladite information.

4. Appareil récepteur selon l'une quelconque des revendications 1 à 3, caractérisé en ce que les moyens pour vérifier si une émission est reçue sont constitués par un système générateur de perturbation appliquée a un circuit de contrôle automatique de fréquence, associé à des moyens pour vérifier si la fréquence reste comprise entre des limites déterminées après ladite perturbation.

5. Appareil récepteur selon l'une quelconque des revendications 2 à 4, caractérisé en ce qu'il est muni de moyens pour, après l'application d'un ou de plusieurs incréments, ramener la fréquence de l'oscillateur à la valeur qui permet la récéption de l'émission trouvée, en fonction de la valeur de l'incrément qui a procuré également la récéption d'une porteuse, et de la susdite fréquence mémorisée provisoirement.

6. Appareil selon la revenciation 5, caractérisé en ce que, quand la fréquence mémorisée est comprise dans les bandes dites III, IV ou V, la fréquence de l'oscillateur choisie pour la réception est égale à la fréquence mémorisée provisoirement.

7. Appareil selon la revendication 5, caractérisé en ce que, quand la fréquence mémorisée est comprise dans la bande dite I, la recherche étant effectuée avec un positionnement initial en norme B, si l'incrément spécial qui a procuré également la réception d'une émission est égal à 6,5 MHZ, la fréquence de l'oscillateur choisie pour la réception est égale à la fréquence mémorisée provisoirement augmentée de 1,5 MHZ, alors que si ledit incrément est égal à 5,5 MHZ, la fréquence de l'oscillateur qui permet la réception est égale à la fréquence mémorisée.

**Claims**

1. A television receiver apparatus for receiving broadcasts of a plurality of different standards, comprising an arrangement for determining the standard based on the frequency width between the sound and picture carriers and on the frequency band of the received broadcast, characterized in that the apparatus is provided with an automatic broadcast program-searching device comprising a local oscillator which operates with successive standard frequency increments and recognizes, after each increment, the absolute value of the frequency representative of the local oscillator frequency, said device comprising means for verifying after each standard increment whether a carrier is received and, if so, for provisionally storing a frequency representative of the local oscillator frequency, further comprising means for introducing a special frequency increment which is equal to the aforesaid frequency width between the sound and picture carriers of one of the broadcasts which can be received, for verifying after the introduction of said increment whether a carrier is also received by utilising the new frequency, and for processing said information.

2. A receiver apparatus as claimed in Claim 1, characterized in that it comprises means for successively introducing a plurality of special increments when a carrier is received after a standard increment, each special increment being equal to one of the frequency widths between the sound and picture carriers of the broadcasts which can be received, and for processing the information indicating with which special increment a carrier is also received.

3. An apparatus as claimed in Claim 2, characterized in that it comprises means for switching the amplifier and demodulator circuits of the receiver as a function of said information.

4. A receiver apparatus as claimed in any one of Claims 1 to 3, characterized in that the means for verifying whether a broadcast is received are constituted by a system for generating a perturbation applied to an automatic frequency control circuit associated with means for verifying whether the frequency remains within the limits determined after said perturbation.

5. A receiver apparatus as claimed in any one of Claims 2 to 4, characterized in that it comprises means with which, after using one or several increments, the oscillator frequency is brought to the value at which the broadcast found can be received as a function of the value of the increment which has also provided the reception of a carrier and as a function of the aforesaid provisionally stored frequency.

6. An apparatus as claimed in Claim 5, characterized in that, when the stored frequency is in the bands designated III, IV or V, the oscillator frequency selected for the reception is equal to the provisionally stored frequency.

7. An apparatus as claimed in Claim 5, characterized in that, when the stored frequency is in the bad designated I in which the search is effected with an initial setting in the B standard, the oscillator frequency selected for the reception is equal to the provisionally stored frequency increased by 1.5 MHz if the special increment which has also provided the reception of a broadcast is equal to 6.5 MHz, while the oscillator frequency selected for the reception is equal to the stored frequency if said increment is equal to 5.5 MHz.

**Patentansprüche**

1. Fernsehempfangsgerät zum Empfangen von Sendern mit verschiedenen Normen, mit einer Normerkennungsschaltung, basiert auf dem Frequenzverhältnis zwischen dem Ton-Träger und dem Bild-Träger und auf dem Frequenzband, in dem der empfagene Sender ausstrahlt, dadurch gekennzeichnet, daß das Gerät mit einer einen Ortsoszillator aufweisenden automatischen Sendersuchaordnung versehen ist, die durch aufeinanderfolgende Standardfrequenzschritte funktioniert und die nach jedem Schritt den für die Ortsoszillatorfrequenz repräsentativen Absolutwert Kennt, wobei das Gerät Mittel aufweist, mit denen nach jedem Standardschritt geprüft wird, ob ein Träger empfangen worden ist und, wenn ja, einstweilig eine für die Ortsoszillatorfrequenz repräsentative Frequenz gespeichert wird, wobei das Gerät außerdem mit Mitteln versehen ist um danach einen Spezialfrequenzsprung einzuführen, entsprechend dem obengenannten Frequenzverhältnis zwischen dem Ton-Träger und dem Bild-Träger eines der Sender, die empfangen werden können, um nach der Einführung dieses Schrittes zu prüfen, ob ein Träger ebenfalls unter Benutzung der neuen Frequenz empfangen worden ist und um diese Information zu benutzen.

2. Empfangsgerät nach Anspruch 1, dadurch gekennzeichnet, daß es mit Mitteln versehen ist um, nachdem ein Träger nach einem Standardsprung empfangen wurde, danach nacheinander mehrere Spezialsprünge entsprechend jedem der Frequenzverhältnisse zwischen den Ton-Trägern und Bild-Trägern der Sender, die empfangen werden können, einzuführen und um die Information zu benutzen, die angibt, mit welchem derselben ein Träger gleichzeitig empfangen wurde.

3. Gerät nach Anspruch 2, dadurch gekennzeichnet, daß es mit Mitteln versehen ist zum Schalten der Verstärker- und Demodulationsschaltungen des Empfängers in Funktion der genannten Information.

4. Empfangsgerät nach einem der Ansprüche 1 bis 3, dadurch gekennzeichnet, daß die Mittel zum Überprüfen, ob ein Sender empfangen worden ist, durch ein Störgeneratorsystem gebildet werden, wobei die Störung einer automatischen Frequenzregelschaltung zugeführt werden, die mit Mitteln zusammenarbeitet zum Überprüfen ob die Frequenz nach der genannten Störung zwischen den bestimmten Grenzen bleibt.

5. Empfangsgerät nach einem der Ansprüche 2 bis 4, dadurch gekennzeichnet, daß es mit Mitteln versehen ist zum nach Durchführung eines oder mehrerer Schritte, Verringern der Oszillatorfrequenz auf ein Wert, der es erlaubt, in Funktion des Wertes des Schrittes, der ebenfalls den Empfang eines Trägers geschaffen hat, den gefundenen Sender sowie die obengenannte einstweilig gespeicherte Frequenz zu empfangen.

6. Gerät nach Anspruch 5, dadurch gekennzeichnet, daß wenn die gespeicherte Frequenz innerhalb der genannten Bänder III, IV oder V liegt, die für den Empfang gewählte Oszillatorfrequenz der einstweilig gespeicherten Frequenz entspricht.

7. Gerät nach Anspruch 5, dadurch gekennzeichnet, daß wenn die gespeicherte Frequenz innerhalb des genannten Bandes I liegt, die Suche mit einer Ausgangslage in der Norm B durchgeführt wird, wenn der Spezialschritt, der ebenfalls den Empfang eines Senders geschaffen hat, gleich 6,5 MHz ist, die für den Empfang gewählte Oszillatorfrequenz der um 1,5 MHz erhöhten einstweilig gespeicherten Frequenz entspricht, während, falls der genannte Schritt gleich 5,5 MHz beträgt, die Oszillatorfrequenz, die den Empfang erlaubt, der gespeicherten Frequenz entspricht.

**FIG.1**

**FIG.2**

# FIG.3